# EUROPÄISCHE PATENTSCHRIFT

(11) **EP 3 569 129 B1**
(45) Veröffentlichungstag und Bekanntmachung des Hinweises auf die Patenterteilung: **10.11.2021**
(21) Anmeldenummer: 19173267.6
(22) Anmeldetag: 08.05.2019
(51) Int. Cl.: A47L 11/40

(54) **VERFAHREN ZUR BESTIMMUNG EINER ROUTE FÜR EINE BODENREINIGUNGSMASCHINE**
METHOD FOR DETERMINING A ROUTE FOR A FLOOR CLEANING MACHINE
PROCÉDÉ DE DÉTERMINATION D'UN ITINÉRAIRE POUR UNE MACHINE DE NETTOYAGE DU SOL

(30) Priorität: 14.05.2018 DE 102018111509
(43) Veröffentlichungstag der Anmeldung: 20.11.2019
(73) Patentinhaber: Hako GmbH, 23843 Bad Oldesloe (DE)
(72) Erfinder: Gabrecht, Alexander, 23701 Eutin (DE); Klüssendorff, Jan Helge, 23556 Lübeck (DE); Stelljes, Joscha, 23909 Ratzeburg (DE)
(74) Vertreter: Bird & Bird LLP

(56) Entgegenhaltungen:
- DE-A1-102009 052 629
- DE-A1-102014 110 265
- US-A1- 2005 183 229
- US-A1- 2015 150 428

## Beschreibung

Die vorliegende Erfindung betrifft ein Verfahren zur Bestimmung einer Route für eine Bodenreinigungsmaschine in einem Gesamtareal, wobei die Bodenreinigungsmaschine ein Reinigungselement umfasst, das für einen Eingriff mit einer Bodenfläche aktiviert werden kann.

Derartige Verfahren werden dazu verwendet, eine Route für eine Bodenreinigungsmaschine zu bestimmen, um große Bodenflächen beispielsweise in öffentlichen Gebäuden oder Supermärkten zu reinigen. Dabei ist das Gesamtareal ein Gebiet in dem sich eine oder mehrere zu reinigende Bodenflächen befinden. Innerhalb dieses Gesamtareals kann sich die Bodenreinigungsmaschine entlang eines Transportpfads zu einer Bodenfläche bewegen, die verschmutzt ist und daher gereinigt werden soll bzw. zwischen mehreren solcher zu reinigenden Bodenflächen bewegen. Während einer Bewegung der Bodenreinigungsmaschine entlang eines Transportpfads ist das Reinigungselement deaktiviert, sodass die Bodenreinigungsmaschine schnell unterschiedliche zu reinigende Bodenflächen anfahren kann. Die zu reinigende Bodenfläche bzw. die zu reinigenden Bodenflächen, auch Arbeitsareale genannt, können von der Bodenreinigungsmaschine entlang von frei bestimmbaren Arbeitspfaden gereinigt werden. Während einer Bewegung der Bodenreinigungsmaschine entlang eines Arbeitspfads ist das Reinigungselement zumindest entlang von Abschnitten des Arbeitspfades aktiviert, sodass die zu reinigende Bodenfläche gereinigt werden kann.

Die DE 10 2017 109 880 A1 beschreibt beispielsweise, dass zuerst ein Umgebungsmodell in einen Roboter importiert wird und anschließend ein Bediener einen gewünschten Pfad des Roboters in das importierte Umgebungsmodel einzeichnet. Auch kann hierbei der Bediener angeben, bei welchen Teilstrecken des Pfads die Reinigungseinheit des Roboters aktiv sein soll.

Die DE 10 2014 110 265 A1 beschreibt ein Verfahren zur Reinigung eines Raumes mithilfe eines autonom fahrenden Gerätes, das nach dem Ausführungsbeispiel in Figur 1 der DE 10 2014 110 265 A1 ein Saugroboter sein kann. Nach Absatz [0008] der DE 10 2014 110 265 A1 wird durch die Lehre der DE 10 2014 110 265 A1 eine einfache und zeitgemäße Nutzer-/Geräte-Interaktion ermöglicht, durch die der Nutzer dem Gerät mitteilen kann, welche Teilbereiche des Raumes besonders intensiv oder gar nicht gereinigt oder bearbeitet werden sollen.

Die DE 10 2009 052 629 A1 beschreibt ein Verfahren zur Steuerung eines Roboters, der nach Absatz [0001] der DE 10 2009 052 629 A1 ein Kehr- und/oder Saugroboter sein kann. Nach Absatz [0030] der DE 10 2009 052 629 A1 kann eine Basisstation vorgesehen sein, die für den Roboter als Ausgangspunkt für seine Reinigungsvorgänge dienen kann. Nach Absatz [0033] der DE 10 2009 052 629 A1 ist für den Roboter anhand einer Karte das gezielte Anfahren eines Raumes möglich, wobei nach Anfahren des entsprechenden Raumes dann in diesem eine Bodenreinigung erfolgen kann.

Bei der Bestimmung einer Route für eine Bodenreinigungsmaschine ist es für einen Bediener wünschenswert, je nach Lage und Anordnung des zu reinigenden Arbeitsareales bzw. der zu reinigenden Arbeitsareale, die Route derart zu bestimmen, dass das Arbeitsareal bzw. die Arbeitsareale möglichst zeiteffizient und kostengünstig von der Bodenreinigungsmaschine angesteuert und gereinigt werden kann.

Es ist daher Aufgabe der vorliegenden Erfindung, ein eingangs beschriebenes Verfahren derart bereitzustellen, dass mehrere Arbeitsareale möglichst zeiteffizient und kostengünstig von der Bodenreinigungsmaschine angesteuert und gereinigt werden.

Die Aufgabe wird gelöst durch ein Verfahren zur Bestimmung einer Route für eine Bodenreinigungsmaschine mit den Merkmalen des Patentanspruchs 1.

Hierdurch wird eine Route bestimmt, die es ermöglicht, das oder die gewünschten Arbeitsareale möglichst zeiteffizient und kostengünstig anzusteuern und zu reinigen. Dadurch, dass eine Route bestimmt wird, die lediglich den Transportpfad umfasst, der sich bis zu einem Anfangs-/Endareal erstreckt, das in dem zu reinigenden Arbeitsareal angeordnet ist, ist es möglich, eine Route zu bestimmen, die die Bodenreinigungsmaschine zu einer zu reinigenden Bodenfläche entlang eines vorbestimmten Weges leitet und gleichzeitig der Bodenreinigungsmaschine die Möglichkeit bietet selbstständig bzw. autonom während der Reinigung des Arbeitsareals den Arbeitspfad zu bestimmen.

Bevorzugt ist die Bodenreinigungsmaschine eine Kehrmaschine, eine Kehrsaugmaschine oder eine Scheuersaugmaschine.

Der Transportpfad wird beispielsweise bestimmt, indem zuerst die Raumkoordinaten des ersten und des zweiten Anfangs-/Endareals und anschließend Zwischenstationen entlang derer der Transportpfad verlaufen soll, über eine Schnittstelle der Bodenreinigungsmaschine eingegeben werden. Die Eingabe kann beispielsweise in einem durch die Schnittstelle graphisch dargestellten Raumplan erfolgen, der die zu reinigenden Arbeitsareale umfasst.

Der Arbeitspfad wird beispielsweise selbstständig von der Bodenreinigungsmaschine bestimmt, wobei die Umgebung der Bodenreinigungsmaschine bevorzugt mit einem Sensor, einem Sensorverbund oder einem Sensorsystem erfasst wird. Außerdem wird der Arbeitspfad beispielsweise bestimmt, indem zuerst die Raumkoordinaten des ersten und des zweiten Anfangs-/Endareals und anschließend Zwischenstationen, entlang derer der Arbeitspfad verlaufen soll, über eine Schnittstelle der Bodenreinigungsmaschine eingegeben werden. Die Eingabe kann beispielsweise in einem durch die Schnittstelle graphisch dargestellten Raumplan erfolgen, welcher die zu reinigenden Arbeitsareale umfasst.

Die Anfangs-/Endareale sind Bereiche in dem Gesamtareal, von denen jeweils zwei einen Transportpfad begrenzen, sodass der Anfang und das Ende des jeweiligen Transportpfads als Teil der Route räumlich bestimmt sind. Jedes der Anfangs-/Endareale kann beispielsweise in einer zu reinigenden Bodenfläche bzw. in einem Arbeitsareal liegen, sodass das Anfangs-/Endareal beispielsweise den Anfang eines Transportpfads von der zu reinigenden Bodenfläche weg oder das Ende eines Transportpfads zu der zu reinigenden Bodenfläche hin vorgibt. Alternativ kann jedes der Anfangs-/Endareale beispielsweise auch außerhalb einer zu reinigenden Bodenfläche bzw. außerhalb eines Arbeitsareals liegen, sodass das Anfangs-/Endareal beispielsweise den Anfang eines Transportpfads zu der zu reinigenden Bodenfläche hin oder das Ende eines Transportpfads von der zu reinigenden Bodenfläche weg vorgibt.

Die Transportpfade können einmal vorgegeben werden und dann für beliebige Routen abgerufen werden. Ferner bildet vorzugsweise jeweils ein Anfangs-/Endareal den Anfang und ein Anfangs-/Endareal das Ende jedes Arbeitspfads, sodass der Anfang und das Ende jedes Arbeitspfads als Teil der Route räumlich bestimmt sind. Bevorzugt wird in den Anfangs-/Endarealen, welche in einem Arbeitsareal liegen, jeweils das Reinigungselement aktiviert bzw. deaktiviert und in den Anfangs-/Endarealen, welche außerhalb des Arbeitsareals bzw. der Arbeitsareale liegen, jeweils das deaktivierte Reinigungselement nicht wieder aktiviert. Liegt ein Anfangs-/Endareal außerhalb des Arbeitsareals bzw. der Arbeitsareale, so bestimmt es häufig den Anfang bzw. das Ende der Route.

Bevorzugt umfasst das Gesamtareal ein Gebäude. Ferner ist der Transportpfad bevorzugt in dem Gebäude angeordnet. Hierdurch wird ein automatischer Transport der Bodenreinigungsmaschine innerhalb des Gebäudes ermöglicht. Alternativ kann der Transportpfad außerhalb des Gebäudes angeordnet sein. Hierdurch wird beispielsweise ein Transport der Bodenreinigungsmaschine zwischen zwei Gebäuden ermöglicht. Außerdem ist in dem Gebäude bevorzugt das Arbeitsareal angeordnet. Hierdurch wird eine Reinigung des Gebäudes bzw. eines Teils des Gebäudes durch die Bodenreinigungsmaschine ermöglicht. Bevorzugt ist das Arbeitsareal außerhalb des Gebäudes angeordnet. Hierdurch wird eine Reinigung von an das Gebäude angrenzenden Bereichen durch die Bodenreinigungsmaschine ermöglicht. Bevorzugt ist das Arbeitsareal ein Raum bzw. ein Teil eines Raums innerhalb des Gebäudes. Hierdurch wird die Reinigung des Raum bzw. eines Teil des Raums ermöglicht.

Bevorzugt umfasst das Reinigungselement einen Reinigungskopf. Bevorzugt ist hierbei die Bodenreinigungsmaschine derart ausgebildet, dass bei aktiviertem Reinigungselement der Reinigungskopf auf die zu reinigende Bodenfläche abgesenkt ist und ggf. an diese angepresst wird und bei deaktiviertem Reinigungselement der Reinigungskopf von der zu reinigenden Bodenfläche abgehoben bzw. beabstandet angeordnet ist.

In einer Ausführungsform wird in einem dritten Schritt der Arbeitspfad innerhalb des Arbeitsareals bestimmt. Beispielsweise wird hierbei der Arbeitspfad wie weiter oben beschrieben bestimmt. Bevorzugt umfasst die Route den Arbeitspfad. Hierdurch wird eine Route bestimmt, die es ermöglicht, das Arbeitsareal besonders zeiteffizient und kostengünstig anzusteuern und zu reinigen, ohne dass es des Eingriffs des Benutzers bedarf. Hierbei wird eine Route bestimmt, welche den Arbeitspfad umfasst und somit eine Kombination von Transportpfad und Arbeitspfad zu einem Gesamtpfad ermöglicht.

In bevorzugter Weise ist die zeitliche Reihenfolge des ersten Schritts, des zweiten Schritts und des dritten Schritts nicht vorgegeben. Der erste Schritt, der zweite Schritt und der dritte Schritt können vielmehr in jeder möglichen Reihenfolge oder auch zeitlich parallel zueinander durchgeführt werden. Beispielsweise wird der erste Schritt zeitlich vor der Bewegung der Bodenreinigungsmaschine entlang des Transportpfads durchgeführt. Ferner wird zusätzlich der zweite Schritt vor der Bewegung der Bodenreinigungsmaschine entlang des Transportpfads durchgeführt. Weiter bevorzugt wird der zweite Schritt alternativ zeitlich während oder nach der Bewegung der Bodenreinigungsmaschine entlang des Transportpfads ausgeführt. Bevorzugt wird zusätzlich der dritte Schritt vor der Bewegung der Bodenreinigungsmaschine entlang des Transportpfads ausgeführt. Weiter bevorzugt wird der dritte Schritt alternativ zeitlich während oder nach der Bewegung der Bodenreinigungsmaschine entlang des Transportpfads durchgeführt. Hierdurch werden unterschiedliche Reihenfolgen der Verfahrensschritte und somit ein flexibles Verfahren bereitgestellt.

Bevorzugt ist jedes der weiteren Arbeitsareale ein Raum.

Bevorzugt umfasst das Gebäude mindestens eins der weiteren Arbeitsareale. Außerdem ist das Gesamtareal bevorzugt das Gebäude. Bevorzugt ist mindestens eins der weiteren Arbeitsareale jeweils ein Raum bzw. ein Teil eines Raums innerhalb des Gebäudes. Hierdurch ist es möglich eine Route mit mindestens zwei Transportpfaden bereitzustellen. Hierdurch kann ein Arbeitsareal ausgehend von einem weiteren Arbeitsareal oder einer Versorgungseinrichtung, insbesondere einer Ladestation und/oder einer Service Station, wie beispielsweise einer Wasserwechselstation und/oder einer Kehrgutentsorgungsstation , von der Bodenreinigungsmaschine zeiteffizient und ohne einen weiteren Eingriff des Benutzers angesteuert werden. Zeitlich nach der Reinigung des Arbeitsareals kann sich die Bodenreinigungsmaschine weiter in Richtung eines weiteren Arbeitsareals oder einer Versorgungseinrichtung, insbesondere einer Ladestation, bewegen. Hierdurch wird ein komplexer Aufbau der Route aus mehreren Transportpfaden ermöglicht, wobei mehrere Arbeitsareale angefahren werden können.

In einer Ausführungsform wird in dem dritten Schritt jeder der weiteren Arbeitspfade innerhalb des jeweiligen weiteren Arbeitsareals bestimmt. In einer weiteren Ausführungsform wird in dem dritten Schritt mindestens einer der weiteren Arbeitspfade innerhalb des jeweiligen weiteren Arbeitsareals bestimmt. Bevorzugt umfasst die Route jeden der weiteren Arbeitspfade, insbesondere jeden der bestimmten weiteren Arbeitspfade. Hierdurch wird eine Route bestimmt, die es ermöglicht mehrere Arbeitsareale besonders zeiteffizient und kostengünstig anzusteuern und zu reinigen, ohne dass es weiterer Eingriffe des Benutzers bedarf. Hierbei wird eine Route bestimmt, welche bevorzugt mindestens zwei Transportpfade als auch mindestens zwei Arbeitspfade umfasst und somit eine Kombination von mindestens zwei Transportpfaden und mindestens zwei Arbeitspfaden zu einem Gesamtpfad ermöglicht. Hierdurch wird ein noch komplexerer Aufbau der Route aus mehreren Transportpfaden und mehreren Arbeitspfaden ermöglicht, wobei eine Vielzahl von Arbeitsarealen angefahren und gereinigt werden können.

Für den Fall, dass während einer Bewegung der Bodenreinigungsmaschine lediglich entlang von Abschnitten des Arbeitspfades das Reinigungselement aktiviert ist, ist während einer Bewegung der Bodenreinigungsmaschine entlang der übrigen Abschnitte des Arbeitspfades das Reinigungselement deaktiviert, sodass sich die Bodenreinigungsmaschine auch schnell entlang der übrigen Abschnitte des Arbeitspfades bewegen kann, insbesondere um zu reinigenden Bodenflächen zu gelangen. Bevorzugt ist vorgesehen, dass während einer Bewegung der Bodenreinigungsmaschine entlang mindestens des Arbeitspfads oder eines der weiteren Arbeitspfade das Reinigungselement deaktiviert ist. Mit anderen Worten kann mindestens ein Arbeits- bzw. Reinigungspfad auch für eine Transportfahrt der Bodenreinigungsmaschine benutzt werden bzw. nur teilweise abgefahren werden um eine kurze und optimale Transportroute zu ermöglichen.

In einer Ausführungsform wird der Transportpfad und/oder jeder der weiteren Transportpfade durch Einlernen bestimmt. Hierdurch ist es einfach möglich, den Transportpfad und/oder jeden der weiteren Transportpfade vor der Bewegung der Bodenreinigungsmaschine entlang des Transportpfads und/oder entlang jedes der weiteren Transportpfade zu bestimmen.

In einer Ausführungsform umfasst das Einlernen ein Abfahren des Transportpfads und/oder jedes der weiteren Transportpfade mit der Bodenreinigungsmaschine, wobei ein Benutzer die Bodenreinigungsmaschine entlang des Transportpfades bewegt und die entsprechende Abfolge von Positionen im Gesamtareal aufgezeichnet wird. Hierdurch ist es möglich, durch Abfahren des Transportpfads und/oder jedes der weiteren Transportpfade mit der Bodenreinigungsmaschine, den Transportpfad und/oder jeden der weiteren Transportpfade ohne das Importieren eines Umgebungsmodells in die Bodenreinigungsmaschine zu bestimmen. Alternativ kann eine Eingabe des Transportpfads und/oder jedes der weiteren Transportpfade über eine Schnittstelle, insbesondere einen Touchscreen, erfolgen. Außerdem kann hierdurch der Transportpfad und/oder jeder der weiteren Transportpfade in Abhängigkeit von tatsächlich vorliegenden räumlichen Gegebenheiten und Hindernissen bestimmt werden. Ferner ist es möglich, durch die Eingabe des Transportpfads und/oder jeder der weiteren Transportpfade über die Schnittstelle, den Transportpfad und/oder jeden der weiteren Transportpfade besonders benutzerfreundlich zu bestimmen. Bevorzugt ist vorgesehen, dass der Transportpfad und/oder jeder der weiteren Transportpfade zumindest teilweise in entgegengesetzten bzw. beiden Richtungen während unterschiedlicher Zeitintervalle abgefahren werden kann/können. Die Richtung, in die der Transportpfad und/oder jeder der weiteren Transportpfade von der Bodenreinigungsmaschine jeweils abgefahren werden soll, kann jeweils beispielsweise von dem Bediener über die Schnittstelle oder von der Bodenreinigungsmaschine automatisch bzw. selbstständig bestimmt werden. Alternativ oder zusätzlich umfasst das Einlernen ein Kartieren der Umgebung, insbesondere der Umgebung des Transportpfads und/oder jedes der weiteren Transportpfade. Hierdurch wird eine automatische Routenplanung für den Transportpfad und/oder jeden der weiteren Transportpfade gewährleistet bzw. ermöglicht. Dies ermöglicht der Bodenreinigungsmaschine ein besseres Abbild der Umgebung und auch die automatische Berechnung späterer Routen.

Bevorzugt wird das Arbeitsareal und/oder jedes der weiteren Arbeitsareale durch Einlernen oder selbstständig von der Bodenreinigungsmaschine bestimmt. Hierdurch ist es möglich, das Arbeitsareal und/oder jedes der weiteren Arbeitsareale vor der Bewegung der Bodenreinigungsmaschine innerhalb des Arbeitsareals und/oder jedes der weiteren Arbeitsareale zu bestimmen oder, alternativ, das Arbeitsareal und/oder jedes der weiteren Arbeitsareale während der Bewegung der Bodenreinigungsmaschine entlang des Arbeitspfads und/oder entlang jedes der weiteren Arbeitspfade, insbesondere automatisch bzw. selbstständig, zu bestimmen.

Bevorzugt umfasst das Einlernen ein Abfahren des Arbeitsareals und/oder jedes der weiteren Arbeitsareale mit der Bodenreinigungsmaschine. Hierdurch ist es möglich, durch Abfahren des Arbeitsareals und/oder jedes der weiteren Arbeitsareale mit der Bodenreinigungsmaschine, das Arbeitsareal und/oder jedes der weiteren Arbeitsareale ohne das Importieren eines Umgebungsmodells in die Bodenreinigungsmaschine zu bestimmen. Außerdem kann hierdurch das Arbeitsareal und/oder jedes der weiteren Arbeitsareale in Abhängigkeit von tatsächlich vorliegenden räumlichen Gegebenheiten und Hindernissen bestimmt werden. Ferner ist es möglich, dass eine Eingabe des Arbeitsareals und/oder jedes der weiteren Arbeitsareale über eine Schnittstelle, insbesondere einen Touchscreen, erfolgt. Durch die Eingabe des Arbeitsareals und/oder jedes der weiteren Arbeitsareale über die Schnittstelle, erfolgt dies besonders benutzerfreundlich. Alternativ oder zusätzlich umfasst das Einlernen ein Kartieren der Umgebung, insbesondere der Umgebung des Arbeitsareals und/oder jedes der weiteren Arbeitsareale bzw. der Umgebung der Bodenreinigungsmaschine innerhalb des Arbeitsareals und/oder jedes der weiteren Arbeitsareale, wie beispielsweise Regale oder Wände innerhalb des Arbeitsareals und/oder jedes der weiteren Arbeitsareale. Hierdurch wird eine automatische Routenplanung für das Arbeitsareal und/oder jedes der weiteren Arbeitsareale gewährleistet bzw. ermöglicht. Dies ermöglicht der Bodenreinigungsmaschine ein besseres Abbild der Umgebung und auch die automatische Berechnung späterer Routen.

In einer Ausführungsform umfasst die selbstständige Bestimmung ein Erfassen der Umgebung der Bodenreinigungsmaschine. Durch das Erfassen der Umgebung der Bodenreinigungsmaschine kann der Arbeitspfad und/oder jeder der weiteren Arbeitspfade und somit die Route in Abhängigkeit von sich kurzfristig ändernden räumlichen Gegebenheiten und Hindernissen bzw. neu hinzukommenden Hindernissen bestimmt werden. Bevorzugt wird die Umgebung mit einem oder mehreren Kollisionssensoren der Bodenreinigungsmaschine erfasst. Hierdurch wird eine zuverlässige Ausführungsform bereitgestellt. Alternativ oder zusätzlich wird die Umgebung bevorzugt mit einem oder mehreren Ultraschallsensoren und/oder Infrarotsensoren und/oder Lasersensoren und/oder 3D-Scannern erfasst. Hierdurch wird eine besonders genaue Erfassung der Umgebung bereitgestellt. Alternativ oder zusätzlich umfasst die selbstständige Bestimmung ein Kartieren des Arbeitsareals. Hierdurch wird ein verkürzter Reinigungsvorgang im Wesentlichen ohne Auslassungsstellen ermöglicht.

In einer Ausführungsform wird der Arbeitspfad und/oder jeder der weiteren Arbeitspfade durch Einlernen oder selbstständig von der Bodenreinigungsmaschine bestimmt. Hierdurch ist es möglich, den Arbeitspfad und/oder jeden der weiteren Arbeitspfade vor der Bewegung der Bodenreinigungsmaschine entlang des Arbeitspfads und/oder entlang jedes der weiteren Arbeitspfade zu bestimmen oder, alternativ, den Arbeitspfad und/oder jeden der weiteren Arbeitspfade während der Bewegung der Bodenreinigungsmaschine entlang des Arbeitspfads und/oder entlang jedes der weiteren Arbeitspfade, insbesondere automatisch bzw. selbstständig, zu bestimmen. Bevorzugt ist vorgesehen, dass der Arbeitspfad und/oder jeder der weiteren Arbeitspfade zumindest teilweise in entgegengesetzten bzw. beiden Richtungen während unterschiedlicher Zeitintervalle abgefahren werden kann/können. Die Richtung, in die der Arbeitspfad und/oder jeder der weiteren Arbeitspfade von der Bodenreinigungsmaschine jeweils abgefahren werden soll, kann jeweils beispielsweise von dem Bediener über die Schnittstelle oder von der Bodenreinigungsmaschine automatisch bzw. selbständig bestimmt werden.

In einer Ausführungsform umfasst das Einlernen ein Abfahren des Arbeitspfads und/oder jedes der weiteren Arbeitspfade mit der Bodenreinigungsmaschine. Hierdurch ist es möglich, durch Abfahren des Arbeitspfads und/oder jedes der weiteren Arbeitspfade mit der Bodenreinigungsmaschine, den Arbeitspfads und/oder jedes der weiteren Arbeitspfade ohne das Importieren eines Umgebungsmodells in die Bodenreinigungsmaschine zu bestimmen. Außerdem kann hierdurch der Arbeitspfad und/oder jeder der weiteren Arbeitspfade in Abhängigkeit von tatsächlich vorliegenden räumlichen Gegebenheiten und Hindernissen bestimmt werden. Ferner ist es möglich, dass eine Eingabe des Arbeitspfads und/oderjedes der weiteren Arbeitspfade über eine Schnittstelle, insbesondere einen Touchscreen, erfolgt. Durch die Eingabe des Arbeitspfads und/oder jedes der weiteren Arbeitspfade über die Schnittstelle, erfolgt dies besonders benutzerfreundlich. Alternativ oder zusätzlich umfasst das Einlernen ein Kartieren der Umgebung, insbesondere der Umgebung des Arbeitspfads und/oder jedes der weiteren Arbeitspfade. Hierdurch wird eine automatische Routenplanung für den Arbeitspfad und/oder jeden der weiteren Arbeitspfade gewährleistet bzw. ermöglicht. Dies ermöglicht der Bodenreinigungsmaschine ein besseres Abbild der Umgebung und auch die automatische Berechnung späterer Routen.

In einer Ausführungsform umfasst die selbstständige Bestimmung ein Erfassen der Umgebung der Bodenreinigungsmaschine. Durch das Erfassen der Umgebung der Bodenreinigungsmaschine kann der Arbeitspfad und/oderjeder der weiteren Arbeitspfade und somit die Route in Abhängigkeit von sich kurzfristig ändernden räumlichen Gegebenheiten und Hindernissen bzw. neu hinzukommenden Hindernissen bestimmt werden. Bevorzugt wird die Umgebung mit einem oder mehreren Kollisionssensoren der Bodenreinigungsmaschine erfasst. Hierdurch wird eine zuverlässige Ausführungsform bereitgestellt. Alternativ oder zusätzlich wird die Umgebung bevorzugt mit einem oder mehreren Ultraschallsensoren und/oder Infrarotsensoren und/oder Lasersensoren und/oder 3D-Scannern erfasst. Hierdurch wird eine besonders genaue Erfassung der Umgebung bereitgestellt. Alternativ oder zusätzlich umfasst die selbstständige Bestimmung ein Kartieren des Arbeitsareals. Hierdurch wird ein verkürzter Reinigungsvorgang im Wesentlichen ohne Auslassungsstellen ermöglicht.

Bevorzugt werden eine oder mehrere Karten generiert und zwischengespeichert, beispielsweise in der Bodenreinigungsmaschine. Bevorzugt werden eine oder mehrere Karten, beispielsweise jeweils für einen Transportpfad, ein Arbeitsareal und/oder einen Arbeitspfad generiert und zwischengespeichert, beispielsweise in der Bodenreinigungsmaschine. Hierdurch können die Karten später einfacher aktualisiert und gepflegt werden.

In einer Ausführungsform fallen eines der Anfangs-/Endareale und eines der weiteren Anfangs-/Endareale zusammen. Hierdurch ist es möglich, eine durchgehende Route bereitzustellen, die mindestens zwei Transportpfade umfasst.

In einer Ausführungsform umfasst eines der Anfangs-/Endareale eine Versorgungseinrichtung, insbesondere eine Ladestation und/oder eine Service Station, wie beispielsweise eine Wasserwechselstation und/oder eine Kehrgutentsorgungsstation. Beispielsweise ist die Versorgungseinrichtung eine Full-Service Dockingstation für die Bodenreinigungsmaschine. Bevorzugt umfasst die Versorgungseinrichtung eine Einrichtung zum Entleeren von Wasser, insbesondere Schmutzwasser, aus der Bodenreinigungsmaschine. Bevorzugt umfasst die Versorgungseinrichtung eine Einrichtung zum Wiederauffüllen von Wasser, insbesondere Frischwasser, in die Bodenreinigungsmaschine. Bevorzugt umfasst die Versorgungseinrichtung eine Einrichtung zum Reinigen eines Tanks der Bodenreinigungsmaschine. Bevorzugt umfasst die Versorgungseinrichtung einen Abfallcontainer für die Bodenreinigungsmaschine, insbesondere für eine Kehrmaschine. Bevorzugt kann in den Abfallcontainer Kehrgut aus der Kehrmaschine automatisch abgeladen werden. Hierdurch können der Bodenreinigungsmaschine unterschiedliche Versorgungseinrichtungen in dem Gesamtareal zur Verfügung gestellt werden. Bevorzugt umfasst mindestens eines der Anfangs-/Endareale eine Versorgungseinrichtung, insbesondere eine Ladestation, und/oder mindestens eines der weiteren Anfangs-/Endareale jeweils eine Versorgungseinrichtung, insbesondere jeweils eine Ladestation. Bevorzugt ist mindestens eine Versorgungseinrichtung in mindestens einem der Anfangs-/Endareale und der weiteren Anfangs-/Endareale eine Versorgungseinrichtung zur Abfallentsorgung und mindestens eine Versorgungseinrichtung in mindestens einem der Anfangs-/Endareale und der weiteren Anfangs-/Endareale eine Ladestation. Hierdurch ist es möglich, eine Route bereitzustellen, die es ermöglicht, mithilfe der Bodenreinigungsmaschine ein Arbeitsareal zu reinigen sowie die Bodenreinigungsmaschine von dem Arbeitsareal zu der Versorgungseinrichtung zu bewegen bzw. von der Versorgungseinrichtung zu dem Arbeitsareal zu bewegen. Bevorzugt umfasst mindestens eines der Anfangs-/Endareale mehrere Versorgungseinrichtungen, insbesondere mehrere Ladestationen, und/oder mindestens eines der weiteren Anfangs-/Endareale jeweils mehrere Versorgungseinrichtungen, insbesondere jeweils mehrere Ladestationen. Hierdurch ist es möglich, eine Route bereitzustellen, entlang derer mehrere Bodenreinigungsmaschinen innerhalb eines der Anfangs-/Endareale und/oder innerhalb eines der weiteren Anfangs-/Endareale geladen werden können.

In einer Ausführungsform werden entlang der Route sowohl die verbleibende Wegstrecke der Route als auch die einer Restmenge einer Ladung, insbesondere einer Akkuladung bzw. Batteriekapazität und/oder Wasserladung bzw. Wasserkapazität, insbesondere Frischwasserladung bzw. Frischwasserkapazität und/oder Schmutzwasserladung bzw. Schmutzwasserkapazität, und/oder Kehrgutbehälterladung bzw. Füllstand eines Behälters, wie beispielsweise eines Kehrgutbehälters, der Bodenreinigungsmaschine entsprechende verbleibende Wegstrecke bestimmt. Bevorzugt werden die verbleibende Wegstrecke der Route und die der Restmenge der Ladung, insbesondere der Akkuladung und/oder Frischwasserladung und/oder Schmutzwasserladung und/oder Kehrgutbehälterladung, der Bodenreinigungsmaschine entsprechende verbleibende Wegstrecke miteinander verglichen. Bevorzugt wird die Route in eine Vielzahl von Routenabschnitte unterteilt. Bevorzugt wird am Anfang jedes Routenabschnitts sowohl die am Anfang des jeweiligen Routenabschnitts verbleibende Wegstrecke der Route als auch die am Anfang des jeweiligen Routenabschnitts der Restmenge der Ladung, insbesondere der Akkuladung und/oder Frischwasserladung und/oder Schmutzwasserladung und/oder Kehrgutbehälterladung, der Bodenreinigungsmaschine entsprechende verbleibende Wegstrecke bestimmt sowie die am Anfang des jeweiligen Routenabschnitts verbleibende Wegstrecke der Route und die am Anfang des jeweiligen Routenabschnitts der Restmenge der Ladung, insbesondere der Akkuladung und/oder Frischwasserladung und/oder Schmutzwasserladung und/oder Kehrgutbehälterladung, der Bodenreinigungsmaschine entsprechende verbleibende Wegstrecke miteinander verglichen.

Beispielsweise wird für den Fall, dass die verbleibende Wegstrecke der Route größer ist als die der Restmenge der Ladung, insbesondere der Akkuladung und/oder Frischwasserladung und/oder Schmutzwasserladung und/oder Kehrgutbehälterladung, der Bodenreinigungsmaschine entsprechende verbleibende Wegstrecke, die von der Bodenreinigungsmaschine am wenigsten beabstandete Versorgungseinrichtung einer Vielzahl von Versorgungseinrichtungen, insbesondere Ladestation einer Vielzahl von Ladestationen, in dem Gesamtareal ermittelt. Bevorzugt wird in diesem Fall die verbleibende Route derart geändert, dass sich die verbleibende Route bis zu einem die von der Bodenreinigungsmaschine am wenigsten beabstandete Versorgungseinrichtung umfassenden Anfangs-/Endareal erstreckt. Ferner wird beispielsweise für den Fall die Route nicht geändert, dass die verbleibende Wegstrecke der Route kleiner als die der Restmenge der Ladung, insbesondere der Akkuladung und/oder Frischwasserladung und/oder Schmutzwasserladung und/oder Kehrgutbehälterladung, der Bodenreinigungsmaschine entsprechende verbleibende Wegstrecke ist. Hierdurch wird ermöglicht, dass die Bodenreinigungsmaschine die Route ungestört abfahren kann oder, sollte dies nicht möglich sein, nicht entlang der Route aufgrund von beispielsweise zu geringer Ackuladung und/oder zu geringer Frischwasserladung und/oder zu hoher Schmutzwasserladung und/oder zu hoher Kehrgutbehälterladung die Reinigungsfahrt unterbrechen muss.

In einer Ausführungsform werden der Transportpfad und/oder jeder der weiteren Transportpfade und/oder der Arbeitspfad und/oder jeder der weiteren Arbeitspfade in der Bodenreinigungsmaschine gespeichert, wobei eine Route aus dem gespeicherten Transportpfad und/oder jedem der gespeicherten weiteren Transportpfade und/oder dem gespeicherten Arbeitspfad und/oder jedem der gespeicherten weiteren Arbeitspfade kombiniert wird. Durch das Speichern mindestens eines Transportpfads und/oder mindestens eines Arbeitspfads, kann der mindestens eine gespeicherte Routenabschnitt für unterschiedlich komplexe Routen verwendet werden, die ein Benutzer durch späteres Auswählen aus dem Speicher kombinieren kann. Bevorzugt bestimmt der Bediener die Arbeitsareale bzw. wählt die Arbeitsareale aus einer Menge von Arbeitsarealen aus und die Bodenreinigungsmaschine kombiniert bzw. bestimmt anhand der bestimmten bzw. ausgewählten Arbeitsareale, insbesondere intelligent, welche Transportpfade für eine Reinigung der bestimmten bzw. ausgewählten Arbeitsareale für die Bestimmung der Route notwendig sind, in welcher Reihenfolge und beispielsweise Richtung die bestimmten bzw. ausgewählten Arbeitsareale und notwendigen Transportpfade abzufahren sind und welche Versorgungseinrichtungen bzw. Zwischenpunkte auf der Route zum Laden und/oder Wasserwechsel und/oder Kehrgutentsorgung genutzt bzw. als Teil der Route von der Bodenreinigungsmaschine angefahren werden. Hierbei wählt die Bodenreinigungsmaschine bevorzugt die Transportpfade und Versorgungseinrichtungen, insbesondere Service Areale, selbstständig aus.

Im Folgenden werden Ausführungsbeispiele für das erfindungsgemäße Verfahren anhand von lediglich beispielhaften schematischen Zeichnungen beschrieben, wobei
- Fig. 1: eine schematische Zeichnung einer Ausführungsform des erfindungsgemäßen Verfahrens zeigt und
- Fig. 2: ein Flussdiagramm einer Ausführungsform des erfindungsgemäßen Verfahrens zeigt.

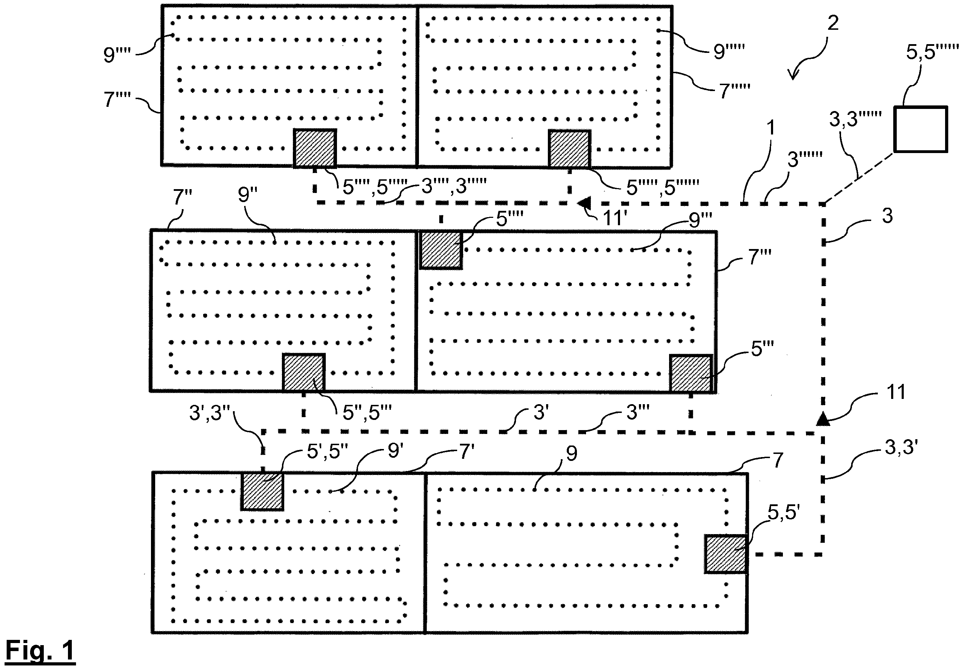

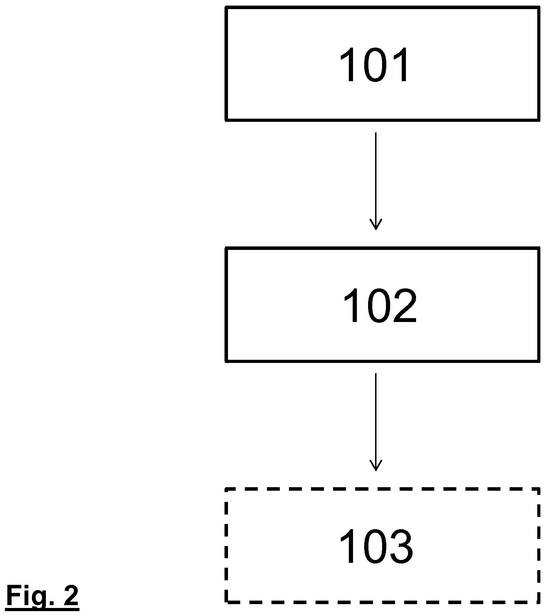

Fig. 1 zeigt eine schematische Zeichnung einer Ausführungsform des erfindungsgemäßen Verfahrens zur Bestimmung einer Route 1 für eine Bodenreinigungsmaschine in einem Gesamtareal 2. Das erfindungsgemäße Verfahren ist für eine Bodenreinigungsmaschine vorgesehen, die ein Reinigungselement umfasst, das für einen Eingriff mit einer Bodenfläche aktiviert werden kann. In einer bevorzugten Ausführungsform umfasst das Gesamtareal 2 ein Gebäude mit einer Vielzahl von Räumen. Ferner zeigt Fig. 1 einen Transportpfad 3 und sechs weitere Transportpfade 3′, 3ʺ, 3‴, 3ʺʺ, 3‴ʺ, 3‴‴ sowie Anfangs-/Endareale 5 und weitere Anfangs-/Endareale 5′, 5ʺ, 5‴, 5ʺʺ, 5‴ʺ, 5‴‴. Des Weiteren sind in Fig. 1 ein Arbeitsareal 7 und fünf weitere Arbeitsareale 7′, 7ʺ, 7‴, 7ʺʺ, 7‴ʺ sowie ein Arbeitspfad 9 und fünf weitere Arbeitspfade 9′, 9ʺ, 9‴, 9ʺʺ, 9‴ʺ dargestellt. Dabei erstrecken sich die Transportpfade 3, 3′, 3ʺ, 3‴ , 3ʺʺ, 3‴ʺ 3‴‴ in dem hier beschriebenen Ausführungsbeispiel teilweise zwischen den Räumen, und ein Teil der Anfangs-/Endareale 5, 5′, 5ʺ, 5‴, 5ʺʺ, 5‴ʺ, 5‴‴ ist jeweils in einem Raum vorgesehen. Schließlich verlaufen die Arbeitspfade 9, 9′, 9ʺ, 9‴, 9ʺʺ, 9‴ʺ entlang von zu reinigenden Bodenflächen bei dem Ausführungsbeispiel jeweils in einem Raum. Fig. 2 zeigt ein Flussdiagramm einer Ausführungsform des erfindungsgemäßen Verfahrens, wobei ein erster Schritt 101 und ein zweiter Schritt 102 und ein optionaler dritter Schritt 103 (gestrichelt) dargestellt sind.

In dem ersten Schritt 101 wird der Transportpfad 3 und die sechs weiteren Transportpfade 3′, 3ʺ. 3‴, 3ʺʺ, 3‴ʺ 3‴‴ bestimmt (siehe Fig. 1). Dies geschieht in dem hier beschriebenen Ausführungsbeispiel durch Einlernen, indem ein Benutzer mit der Bodenreinigungsmaschine den jeweiligen Transportpfad 3, 3′, 3ʺ, 3‴, 3ʺʺ, 3‴ʺ, 3‴‴ abfährt, wobei die Raumkoordinaten für den Transportpfad 3, 3′, 3ʺ, 3‴ 3ʺʺ, 3‴ʺ 3‴‴ von der Bodenreinigungsmaschine aufgezeichnet werden. Alternativ ist es auch möglich, die Transportpfade 3, 3′, 3ʺ, 3‴, 3ʺʺ, 3‴ʺ, 3‴‴ beispielsweise durch eine Eingabe von Raumkoordinaten in eine Schnittstelle der Bodenreinigungsmaschine zu bestimmen, wobei die Raumkoordinaten wieder unterschiedliche Punkte entlang des Transportpfads 3 und der sechs weiteren Transportpfade 3′, 3ʺ, 3‴, 3ʺʺ, 3‴ʺ 3‴‴ festlegen. Hierbei umfasst das Gesamtareal 2 den Transportpfad 3 sowie die sechs weiteren Transportpfade 3′, 3ʺ, 3‴, 3ʺʺ, 3‴ʺ, 3‴‴. Der Transportpfad 3 erstreckt sich zwischen einem ersten und einem zweiten Anfangs-/Endareal 5. Ferner erstreckt sich jeder der weiteren Transportpfade 3′, 3ʺ, 3‴, 3ʺʺ, 3‴ʺ, 3‴‴ jeweils zwischen einem ersten weiteren und einem zweiten weiteren Anfangs-/Endareal 5′, 5ʺ, 5‴, 5ʺʺ, 5‴ʺ, 5‴‴. Der Transportpfad 3 und jeder der weiteren Transportpfade 3′, 3ʺ, 3‴, 3ʺʺ, 3‴ʺ, 3‴‴ ist jeweils derart angeordnet, dass sich die Bodenreinigungsmaschine beim Abfahren der Route 1 zu einer zu reinigenden Bodenfläche in einem Raum hin bzw. von einer zu reinigenden Bodenfläche weg bewegen kann.

Während einer Bewegung der Bodenreinigungsmaschine entlang des Transportpfads 3 und jeder der sechs weiteren Transportpfade 3′, 3ʺ, 3‴, 3ʺʺ, 3‴ʺ, 3‴‴ ist das Reinigungselement deaktiviert.

In dem zweiten Schritt 102 wird ein Arbeitsareal 7 sowie fünf weitere Arbeitsareale 7′, 7ʺ, 7‴, 7ʺʺ, 7‴ʺ bestimmt. Hierbei umfasst das Gesamtareal 2 das Arbeitsareal 7 sowie jedes der fünf weiteren Arbeitsareale 7′, 7ʺ, 7‴, 7ʺʺ, 7‴ʺ. In dem hier beschriebenen Ausführungsbeispiel sind die Arbeitsareale 7, 7′, 7ʺ, 7‴, 7ʺʺ, 7‴ʺ jeweils in Räumen eines Gebäudes angeordnet. Das Arbeitsareal 7 umfasst eins der Anfangs-/Endareale 5 und jedes der weiteren Arbeitsareale 7′, 7ʺ, 7‴, 7ʺʺ, 7‴ʺ umfasst jeweils mindestens eins der weiteren Anfangs-/Endareale 5′, 5ʺ, 5‴, 5ʺʺ, 5‴ʺ, 5‴‴.

In der hier dargestellten Ausführungsform umfasst das Arbeitsareal 7 eines der Anfangs-/Endareale 5 sowie eines der weiteren Anfangs-/Endareale 5′, wobei das von dem Arbeitsareal 7 umfasste Anfangs-/Endareal 5 und das von dem Arbeitsareal 7 umfasste weitere Anfangs-/Endareale 5′ zusammenfallen bzw. innerhalb des Gesamtareals 2 identisch angeordnet sind. Mit anderen Worten ist eines der Anfangs-/Endareale 5 sowie eines der weiteren Anfangs-/Endareale 5′ in dem Arbeitsareal 7 angeordnet und der Arbeitspfad beginnt und endet hier an derselben Stelle. Entsprechendes gilt für die jeweilige Anordnung der weiteren Anfangs-/Endareale 5′, 5ʺ, 5‴, 5ʺʺ, 5‴ʺ, 5‴‴ innerhalb der weiteren Arbeitsareale 7′, 7ʺ, 7‴ , 7ʺʺ, 7‴ʺ, und zwar wie folgt: Das weitere Arbeitsareal 7′ umfasst zwei der weiteren Anfangs-/Endareale 5′, 5ʺ, wobei die von dem weiteren Arbeitsareal 7′ umfassten weiteren Anfangs-/Endareale 5′, 5ʺ zusammenfallen bzw. innerhalb des Gesamtareals 2 identisch angeordnet sind. Außerdem umfasst das weitere Arbeitsareal 7ʺ zwei der weiteren Anfangs-/Endareale 5ʺ, 5‴, wobei die von dem weiteren Arbeitsareal 7ʺ umfassten weiteren Anfangs-/Endareale 5ʺ, 5‴ zusammenfallen bzw. innerhalb des Gesamtareals 2 identisch angeordnet sind. Ferner umfasst das weitere Arbeitsareal 7‴ zwei der weiteren Anfangs-/Endareale 5‴, 5ʺʺ, wobei die von dem weiteren Arbeitsareal 7‴ umfassten weiteren Anfangs-/Endareale 5‴, 5ʺʺ innerhalb des weiteren Arbeitsareals 7‴ voneinander beabstandet angeordnet sind. Bevorzugt sind die weiteren Anfangs-/Endareale 5‴, 5ʺʺ in gegenüberliegenden Ecken des weiteren Arbeitsareals 7‴ wie in Fig. 1 dargestellt angeordnet, sodass ein Reinigungsstart in einem der weiteren Anfangs-/Endareale 5‴, 5ʺʺ und ein Reinigungsstopp in dem anderen der weiteren Anfangs-/Endareale 5‴, 5ʺʺ stattfinden kann und somit beispielsweise ein Raum 7‴ mit zwei Ein- bzw. Ausgängen effizient gereinigt werden kann. Des Weiteren umfasst das weitere Arbeitsareal 7ʺʺ zwei der weiteren Anfangs-/Endareale 5ʺʺ, 5‴ʺ, wobei die von dem weiteren Arbeitsareal 7ʺʺ umfassten weiteren Anfangs-/Endareale 5ʺʺ, 5‴ʺ, zusammenfallen bzw. innerhalb des Gesamtareals 2 identisch angeordnet sind. Schließlich umfasst das weitere Arbeitsareal 7‴ʺ zwei der weiteren Anfangs-/Endareale 5‴ʺ, 5‴‴, wobei die von dem weiteren Arbeitsareal 7‴ʺ umfassten weiteren Anfangs-/Endareale 5‴ʺ, 5‴‴, zusammenfallen bzw. innerhalb des Gesamtareals 2 identisch angeordnet sind.

Während einer Bewegung der Bodenreinigungsmaschine innerhalb des Arbeitsareals 7 entlang eines Arbeitspfads sowie innerhalb jedes der fünf weiteren Arbeitsareale 7′, 7ʺ, 7‴ 7ʺʺ, 7‴ʺ jeweils entlang eines weiteren Arbeitspfads 9′, 9ʺ, 9‴, 9ʺʺ, 9‴ʺ ist das Reinigungselement zumindest abschnittsweise aktiviert. Es ist aber auch denkbar, dass das Reinigungselement dauerhaft aktiviert ist. Wie in Fig. 1 dargestellt, sind der Arbeitspfad sowie die weiteren Arbeitspfade 9′, 9ʺ,9ʺʺ, 9‴ʺ geschlossene Pfade, wobei der weitere Arbeitspfad 9‴ ein Arbeitspfad mit sich unterscheidenden Anfangs- und Endpunkten bzw. weiteren Anfangs-/Endarealen 5‴ 5ʺʺ ist.

In dem optionalen dritten Schritt 103 wird der Arbeitspfad innerhalb des Arbeitsareals 7 sowie jeder der weiteren Arbeitspfade 9′, 9ʺ, 9‴, 9ʺʺ, 9‴ʺ innerhalb des jeweiligen weiteren Arbeitsareals 7′, 7ʺ, 7‴, 7ʺʺ, 7‴ʺ bestimmt. Beispielsweise wird der Arbeitspfad und jeder der weiteren Arbeitspfade 9′, 9ʺ, 9‴, 9ʺʺ, 9‴ʺ durch Einlernen, insbesondere durch ein Abfahren des Arbeitspfads und/oder jedes der weiteren Arbeitspfade 9′, 9ʺ, 9‴, 9ʺʺ, 9‴ʺ mit der Bodenreinigungsmaschine und/oder durch eine Eingabe des Arbeitspfads und/oder jedes der weiteren Arbeitspfade 9′, 9ʺ, 9‴, 9ʺʺ, 9‴ʺ über eine Schnittstelle, insbesondere einen Touchscreen, bestimmt. Alternativ kann der Arbeitspfad und jeder der weiteren Arbeitspfade 9′, 9ʺ, 9‴, 9ʺʺ, 9‴ʺ beispielsweise selbstständig von der Bodenreinigungsmaschine bestimmt werden, indem beispielsweise die Bodenreinigungsmaschine die Umgebung der Bodenreinigungsmaschine erfasst. Bevorzugt wird die Umgebung mit einem oder mehreren Kollisionssensoren oder 3D-Sensoren der Bodenreinigungsmaschine erfasst. Alternativ oder zusätzlich wird die Umgebung bevorzugt mit einem oder mehreren Ultraschallsensoren und/oder Infrarotsensoren und/oder Lasersensoren erfasst. Alternativ oder zusätzlich umfasst die selbstständige Bestimmung ein Kartieren des Arbeitsareals, wodurch ein verkürzter Reinigungsvorgang im Wesentlichen ohne Auslassungsstellen ermöglicht wird.

Bevorzugt ist vorgesehen, dass zuerst der Transportpfad 3 und jeder der weiteren Transportpfade 3′, 3ʺ, 3‴, 3ʺʺ, 3‴ʺ, 3‴‴ bestimmt bzw. eingelernt wird, danach das Arbeitsareal 7 und jedes der weiteren Arbeitsareale 7′, 7ʺ, 7‴, 7ʺʺ, 7‴ʺ bestimmt wird und schließlich der Arbeitspfad und jeder der weiteren Arbeitspfade 9′, 9ʺ, 9‴, 9ʺʺ, 9‴ʺ bestimmt bzw. eingelernt wird. Alternativ ist jedoch auch vorgesehen, dass zuerst eine beliebige Kombination von Transportpfad 3, weiterer Transportpfad 3′, 3ʺ, 3‴, 3ʺʺ, 3‴ʺ, 3‴‴, Arbeitsareal 7, weiteres Arbeitsareal 7′, 7ʺ, 7‴, 7ʺʺ, 7‴ʺ, Arbeitspfad 9 und weiterer Arbeitspfad 9′, 9ʺ, 9‴, 9ʺʺ, 9ʺ‴ bestimmt bzw. eingelernt und bevorzugt zwischengespeichert wird und anschließend eine beliebige weitere Kombination von Transportpfad 3, weiterer Transportpfad 3′, 3ʺ, 3‴ , 3ʺʺ, 3‴ʺ, 3‴‴, Arbeitsareal 7, weiteres Arbeitsareal 7′, 7ʺ, 7‴ 7ʺʺ, 7‴ʺ, Arbeitspfad und weiterer Arbeitspfad 9′, 9ʺ, 9‴, 9ʺʺ, 9‴ʺ bestimmt bzw. eingelernt und bevorzugt zwischengespeichert wird. Hierdurch können beliebig komplexe Routen geändert, beispielsweise erweitert, werden.

Im vorliegend dargestellten Ausführungsbeispiel umfasst die Route 1 den Transportpfad 3, jeden der weiteren Transportpfade 3′, 3ʺ, 3‴, 3ʺʺ, 3‴ʺ, 3‴‴, den Arbeitspfad sowie jeden der weiteren Arbeitspfade 9′, 9ʺ, 9‴, 9ʺʺ, 9‴ʺ.

Die in Fig. 1 dargestellte Route 1 ist für eine Bewegung der Bodenreinigungsmaschine in folgender Reihenfolge vorgesehen: weiterer Transportpfad 3‴‴ - weiterer Arbeitspfad 9‴ʺweiterer Transportpfad 3‴ʺ- weiterer Arbeitspfad 9ʺʺ - weiterer Transportpfad 3ʺʺ - weiterer Arbeitspfad 9‴ - weiterer Transportpfad 3‴ - weiterer Arbeitspfad 9ʺ - weiterer Transportpfad 3ʺ - weiterer Arbeitspfad 9′ - weiterer Transportpfad 3′ - Arbeitspfad - Transportpfad 3.

Alternativ ist jedoch auch eine Bewegung der Bodenreinigungsmaschine in entgegengesetzter Richtung möglich.

Der Transportpfad 3 sowie jeder der weiteren Transportpfade 3′, 3ʺ, 3‴ , 3ʺʺ, 3‴ʺ, 3‴‴ ist für eine "Transportfahrt" der Bodenreinigungsmaschine vorgesehen, d.h. für eine Bewegung der Bodenreinigungsmaschine innerhalb des Gesamtareals 2 mit deaktiviertem Reinigungselement. Ferner ist der Arbeitspfad sowie jeder der weiteren Arbeitspfade 9′, 9ʺ, 9‴, 9ʺʺ, 9‴ʺ für eine "Reinigungsfahrt" der Bodenreinigungsmaschine vorgesehen, d.h. für eine Bewegung der Bodenreinigungsmaschine innerhalb des Gesamtareals 2 mit zumindest abschnittsweise aktiviertem Reinigungselement. Der Arbeitspfad sowie jeder der weiteren Arbeitspfade 9′, 9ʺ, 9‴, 9ʺʺ 9‴ʺ können auch als Reinigungspfade verstanden werden.

In den Anfangs-/Endarealen 5 und den weiteren Anfangs-/Endarealen 5′, 5ʺ, 5‴ 5ʺʺ, 5‴ʺ, 5‴‴ beginnt bzw. endet jeweils die Bewegung der Bodenreinigungsmaschine entlang des Transportpfads 3 bzw. entlang jedes der sechs weiteren Transportpfade 3′, 3ʺ, 3‴, 3ʺʺ, 3‴ʺ, 3‴‴ und beginnt bzw. endet jeweils die Bewegung der Bodenreinigungsmaschine entlang des Arbeitspfads bzw. entlang jedes der weiteren Arbeitspfade 9′, 9ʺ, 9‴, 9ʺʺ, 9‴ʺ. Die Anfangs-/Endareale 5 und die weiteren Anfangs-/Endareale 5′, 5ʺ, 5‴ 5ʺʺ, 5‴ʺ, 5‴‴ können auch als Start-/End Zonen bezeichnet werden. Bevorzugt wird hier jeweils das Reinigungselement aktiviert bzw. deaktiviert. Die Anfangs-/Endareale 5 und die weiteren Anfangs-/Endareale 5′, 5ʺ, 5‴, 5ʺʺ, 5‴ʺ, 5‴‴ können jeweils auch lediglich den Anfang bzw. das Ende einer Route bestimmen. Beispielsweise bestimmt das Anfangs-/Endareal 5, welches außerhalb des Arbeitsareals 7 und außerhalb jedes der fünf weiteren Arbeitsareale 7′, 7ʺ, 7‴, 7ʺʺ, 7‴ʺ angeordnet ist, das Ende der Route 1 und das weitere Anfangs-/Endareal 5‴‴, welches außerhalb des Arbeitsareals 7 und außerhalb jedes der fünf weiteren Arbeitsareale 7′, 7ʺ, 7‴, 7ʺʺ, 7‴ʺ angeordnet ist, den Anfang der Route 1.

Im vorliegend dargestellten Ausführungsbeispiel wird der Transportpfad 3 und/oder jeder der weiteren Transportpfade 3′, 3ʺ, 3‴, 3ʺʺ, 3‴ʺ, 3‴‴ durch Einlernen bestimmt. Hierbei umfasst das Einlernen ein Abfahren des Transportpfads 3 und jedes der weiteren Transportpfade 3′, 3ʺ, 3‴ , 3ʺʺ, 3‴ʺ 3‴‴ mit der Bodenreinigungsmaschine. Alternativ ist im vorliegend dargestellten Ausführungsbeispiel vorgesehen, dass das Einlernen die Eingabe des Transportpfads 3 und/oder jedes der weiteren Transportpfade 3′, 3ʺ, 3‴, 3ʺʺ, 3‴ʺ, 3‴‴ über eine Schnittstelle umfasst.

Vorliegend wird der Arbeitspfad und jeder der weiteren Arbeitspfade 9′, 9ʺ, 9‴, 9ʺʺ, 9‴ʺ selbstständig von der Bodenreinigungsmaschine bestimmt. Hierbei ist vorgesehen, dass die selbstständige Bestimmung ein Erfassen der Umgebung der Bodenreinigungsmaschine umfasst. Alternativ ist im vorliegend dargestellten Ausführungsbeispiel vorgesehen, dass der Arbeitspfad und jeder der weiteren Arbeitspfade 9′, 9ʺ, 9‴, 9ʺʺ, 9‴ʺ durch Einlernen bestimmt werden. Hierbei umfasst das Einlernen ein Abfahren des Arbeitspfads und jedes der weiteren Arbeitspfade 9′, 9ʺ, 9‴, 9ʺʺ, 9‴ʺ mit der Bodenreinigungsmaschine und/oder eine Eingabe des Arbeitspfads 9 und jedes der weiteren Arbeitspfade 9′, 9ʺ, 9‴, 9ʺʺ, 9‴ʺ über eine Schnittstelle.

Bevorzugt sind in dem vorliegenden Ausführungsbeispiel der Transportpfad 3 und jeder der weiteren Transportpfade 3′, 3ʺ, 3‴, 3ʺʺ, 3‴ʺ, 3‴‴ einerseits und der Arbeitspfad 9 und jeder der weiteren Arbeitspfade 9′, 9ʺ, 9‴, 9ʺʺ, 9‴ʺ andererseits getrennt voneinander programmierbar, insbesondere durch einen Bediener der Bodenreinigungsmaschine, vorgesehen.

In dem vorliegenden Ausführungsbeispiel sind eines der Anfangs-/Endareale 5 und eines der weiteren Anfangs-/Endareale 5‴‴ außerhalb des Arbeitsareals 7 und außerhalb der weiteren Arbeitsareale 7′, 7ʺ, 7‴, 7ʺʺ, 7ʺʺ angeordnet. Ferner fallen das eine der Anfangs-/Endareale 5 und das eine der weiteren Anfangs-/Endareale 5‴‴ zusammen bzw. sind das eine der Anfangs-/Endareale 5 und das eine der weiteren Anfangs-/Endareale 5‴‴ innerhalb des Gesamtareals 2 identisch angeordnet. Hierbei umfasst das eine der Anfangs-/Endareale 5 und das eine der weiteren Anfangs-/Endareale 5‴‴ eine Ladestation, insbesondere eine Akkuladestation, und/oder eine Service Station, wie beispielsweise eine Wasserwechselstation und/oder eine Kehrgutentsorgungsstation..

Des Weiteren werden entlang der Route 1 sowohl die verbleibende Wegstrecke der Route 1 als auch die einer Restmenge einer Ladung, insbesondere eine Akkuladung bzw. Batteriekapazität und/oder Wasserladung bzw. Wasserkapazität, insbesondere Frischwasserladung bzw. Frischwasserkapazität und/oder Schmutzwasserladung bzw. Schmutzwasserkapazität, und/oder Kehrgutbehälterladung bzw. Füllstand eines Behälters, wie beispielsweise eines Kehrgutbehälters, der Bodenreinigungsmaschine entsprechende verbleibende Wegstrecke bestimmt, wobei die verbleibende Wegstrecke der Route 1 und die der Restmenge der Ladung der Bodenreinigungsmaschine entsprechende verbleibende Wegstrecke miteinander verglichen.

Schließlich ist eine Richtungsvorgabe der Route 1 vorgesehen, insbesondere eine Richtungsvorgabe des Transportpfads 3 und der weiteren Transportpfade 3′, 3ʺ, 3‴, 3ʺʺ, 3‴ʺ, 3‴‴, eine sogenannte Transportfahrt mit Richtungsvorgabe. Mit anderen Worten ist die Richtung 11, 11′ der Route 1 bestimmbar, beispielsweise durch einen Bediener der Schnittstelle oder selbstständig von der Bodenreinigungsmaschine. Die Richtungsvorgabe bedeutet beispielsweise, dass der entsprechende Transportpfad 3, 3′, 3ʺ, 3‴, 3ʺʺ, 3‴ʺ 3‴‴ während einer Transportfahrt der Bodenreinigungsmaschine nur in die vorgegebene Richtung befahren werden darf. Die in Fig. 1 dargestellte Route 1 ist für eine Bewegung der Bodenreinigungsmaschine in folgender Reihenfolge vorgesehen: weiteres Anfangs-/Endareal 5‴‴ außerhalb des Arbeitsareals 7 und der weiteren Arbeitsareale 7′, 7ʺ, 7‴, 7ʺʺ, 7‴ʺ angeordnet - weiteres Anfangs-/Endareal 5‴‴ innerhalb des weiteren Arbeitsareals 7‴ʺ - weiteres Anfangs-/Endareal 5‴ʺ innerhalb des weiteren Arbeitsareals 7‴ʺ - weiteres Anfangs-/Endareal 5‴ʺ innerhalb des weiteren Arbeitsareals 7ʺʺ - weiteres Anfangs-/Endareal 5ʺʺ innerhalb des weiteren Arbeitsareals 7ʺʺ - weiteres Anfangs-/Endareal 5ʺʺ innerhalb des weiteren Arbeitsareals 7‴ - weiteres Anfangs-/Endareal 5‴ innerhalb des weiteren Arbeitsareals 7‴ ― weiteres Anfangs-/Endareal 5‴ innerhalb des weiteren Arbeitsareals 7ʺ ― weiteres Anfangs-/Endareal 5ʺ innerhalb des weiteren Arbeitsareals 7ʺ ― weiteres Anfangs-/Endareal 5ʺ innerhalb des weiteren Arbeitsareals 7' ― weiteres Anfangs-/Endareal 5' innerhalb des weiteren Arbeitsareals 7' ― weiteres Anfangs-/Endareal 5' innerhalb des Arbeitsareals 7 ―Anfangs-/Endareal 5 innerhalb des Arbeitsareals 7 ― Anfangs-/Endareal 5 außerhalb des Arbeitsareals 7 und der weiteren Arbeitsareale 7′, 7ʺ, 7‴ 7ʺʺ, 7‴ʺ angeordnet. Alternativ ist jedoch auch eine Bewegung der Bodenreinigungsmaschine in entgegengesetzter Richtung möglich.

Die einzelnen Bestandteile der in Fig.1 dargestellten Route 1, d.h. der Transportpfad 3, die weiteren Transportpfade 3′, 3ʺ, 3‴ , 3ʺʺ, 3‴ʺ, 3‴‴, der Arbeitspfad 9 und die weiteren Arbeitspfade 9′, 9ʺ, 9‴, 9ʺʺ, 9‴ʺ, können zwischengespeichert werden, beispielsweise in der Schnittstelle oder in der Bodenreinigungsmaschine, und anschließend für die Bestimmung unterschiedlicher komplexer Routen verwendet werden. Beispielsweise kann eine weitere Route bestimmte werden, die den Transportpfad 3 und den Arbeitspfad 9 umfasst. Diese Route kann derart bestimmt werden, dass zuerst der Transportpfad 3, dann der Arbeitspfad 9 und anschließend der Transportpfad 3 von der Bodenreinigungsmaschine abgefahren wird. Indem die Route und die weitere Route zu einer Gesamtroute kombiniert werden, kann beispielsweise ein höherer Reinigungsbedarf in dem Arbeitsareal 7 im Vergleich zu den weiteren Arbeitsarealen 7′, 7ʺ, 7‴, 7ʺʺ, 7‴ʺ berücksichtig werden, da bei einer derartigen Gesamtroute das Arbeitsareal 7 doppelt so oft gereinigt wird wie die weiteren Arbeitsareale 7′, 7ʺ, 7‴ 7ʺʺ, 7‴ʺ.

Beispielsweise ist auch vorgesehen, dass der Bediener mindestens eine Teilmenge aus Arbeitsareal 7 und weiteren Arbeitsarealen 7′, 7ʺ, 7‴ 7ʺʺ, 7‴ʺ bestimmt bzw. der Bodenreinigungsmaschine vorgibt und die Bodenreinigungsmaschine für die bestimmten bzw. vorgegebenen Arbeitsareale 7, 7′, 7ʺ, 7‴ 7ʺʺ, 7‴ʺ die zur Reinigung der Arbeitsareale 7, 7′, 7ʺ, 7‴, 7ʺʺ, 7‴ʺ notwendigen Transportpfade 3, 3′, 3ʺ, 3‴, 3ʺʺ, 3‴ʺ, 3‴‴ sowie Anfangs-/Endareale 5, 5′, 5ʺ, 5‴, 5ʺʺ, 5‴ʺ 5‴‴ mit jeweils entsprechenden Versorgungseinrichtungen bzw. Zwischenladepunkten, insbesondere Ladestationen oder Service Stationen, wie beispielsweise Wasserwechselstationen und/oder Kehrgutentsorgungsstationen, selbstständig bestimmt.

**Bezugszeichen**

| | | |
|---|---|---|
| 1 | | Route |
| 2 | | Gesamtareal |
| 3 | | Transportpfad |
| 3', 3", 3"', 3"", 3""', 3""" | | weiterer Transportpfad |
| 5 | | Anfangs-/Endareal |
| 5', 5", 5"', 5"", 5""', 5""" | | weiteres Anfangs-/Endareal |
| 7 | | Arbeitsareal |
| 7', 7", 7"', 7"", 7""' | | weiteres Arbeitsareal |
| 9 | Arbeitspfads | |
| 9', 9", 9"', 7"", 7""' | | weiterer Arbeitspfad |
| 11, 11' | | Richtung der Route |
| 101 | erster Schritt | |
| 102 | zweiter Schritt | |
| 103 | dritter Schritt | |

## Patentansprüche

1. Verfahren zur Bestimmung einer Route (1) für eine Bodenreinigungsmaschine in einem Gesamtareal (2), wobei die Bodenreinigungsmaschine ein Reinigungselement umfasst, das für einen Eingriff mit einer Bodenfläche aktiviert werden kann, wobei in einem ersten Schritt (101) ein Transportpfad (3) bestimmt wird, wobei das Gesamtareal (2) den Transportpfad (3) umfasst, wobei sich der Transportpfad (3) zwischen einem ersten und einem zweiten Anfangs-/Endareal (5) erstreckt, wobei während einer Bewegung der Bodenreinigungsmaschine entlang des Transportpfads (3) das Reinigungselement deaktiviert ist, wobei in einem zweiten Schritt (102) ein Arbeitsareal (7) bestimmt wird, wobei das Gesamtareal (2) das Arbeitsareal (7) umfasst, wobei das Arbeitsareal (7) mindestens eins der Anfangs-/Endareale (5) umfasst, wobei während einer Bewegung der Bodenreinigungsmaschine innerhalb des Arbeitsareals (7) entlang eines Arbeitspfads (9) das Reinigungselement zumindest zeitweise aktiviert ist, wobei die Route (1) den Transportpfad (3) umfasst, wobei in dem ersten Schritt (101) mindestens ein weiterer Transportpfad (3') bestimmt wird, wobei das Gesamtareal (2) jeden der weiteren Transportpfade (3') umfasst, wobei sich jeder der weiteren Transportpfade (3') jeweils zwischen einem ersten weiteren und einem zweiten weiteren Anfangs-/Endareal (5') erstreckt, wobei während einer Bewegung der Bodenreinigungsmaschine entlang jedes der weiteren Transportpfade (3') das Reinigungselement deaktiviert ist, wobei in dem zweiten Schritt (102) mindestens ein weiteres Arbeitsareal (7') bestimmt wird, wobei das Gesamtareal (2) jedes der weiteren Arbeitsareale (7') umfasst, wobei jedes der weiteren Arbeitsareale (7') mindestens eins der weiteren Anfangs-/Endareale (5') umfasst, wobei während einer Bewegung der Bodenreinigungsmaschine innerhalb jedes der weiteren Arbeitsareale (7') jeweils entlang eines weiteren Arbeitspfads (9') das Reinigungselement zumindest zeitweise aktiviert ist, wobei die Route (1) jeden der weiteren Transportpfade (3') umfasst, wobei das Arbeitsareal (7) ein anderes der weiteren Anfangs-/Endareale (5') umfasst.

2. Verfahren nach Anspruch 1, wobei in einem dritten Schritt (103) der Arbeitspfad (9) innerhalb des Arbeitsareals (7) bestimmt wird, wobei die Route (1) den Arbeitspfad (9) umfasst.

3. Verfahren nach einem der vorherigen Ansprüche, wobei in dem dritten Schritt (103) jeder der weiteren Arbeitspfade (9') innerhalb des jeweiligen weiteren Arbeitsareals (7') bestimmt wird, wobei die Route (1) jeden der weiteren Arbeitspfade (9') umfasst.

4. Verfahren nach einem der vorherigen Ansprüche, wobei der Transportpfad (3) und/oder jeder der weiteren Transportpfade (3') durch Einlernen bestimmt wird.

5. Verfahren nach Anspruch 4, wobei das Einlernen ein Abfahren des Transportpfads (3) und/oder jedes der weiteren Transportpfade (3') mit der Bodenreinigungsmaschine und/oder eine Eingabe des Transportpfads (3) und/oderjedes der weiteren Transportpfade (3') über eine Schnittstelle umfasst.

6. Verfahren nach einem der vorherigen Ansprüche, wobei der Arbeitspfad (9) und/oder jeder der weiteren Arbeitspfade (9') durch Einlernen oder selbstständig von der Bodenreinigungsmaschine bestimmt wird.

7. Verfahren nach Anspruch 6, wobei das Einlernen ein Abfahren des Arbeitspfads (9) und/oder jedes der weiteren Arbeitspfade (9') mit der Bodenreinigungsmaschine und/oder eine Eingabe des Arbeitspfads (9) und/oder jedes der weiteren Arbeitspfade (9') über eine Schnittstelle umfasst.

8. Verfahren nach Anspruch 6, wobei die selbstständige Bestimmung ein Erfassen der Umgebung der Bodenreinigungsmaschine umfasst.

9. Verfahren nach einem der vorherigen Ansprüche, wobei eins der Anfangs-/Endareale (5) und eins der weiteren Anfangs-/Endareale (5') zusammenfallen.

10. Verfahren nach einem der vorherigen Ansprüche, wobei eins der Anfangs-/Endareale (5) eine Versorgungseinrichtung, insbesondere eine Ladestation, umfasst.

11. Verfahren nach einem der vorherigen Ansprüche, wobei entlang der Route (1) sowohl die verbleibende Wegstrecke der Route (1) als auch die einer Restmenge einer Ladung der Bodenreinigungsmaschine entsprechende verbleibende Wegstrecke bestimmt werden, wobei die verbleibende Wegstrecke der Route (1) und die der Restmenge der Ladung der Bodenreinigungsmaschine entsprechende verbleibende Wegstrecke miteinander verglichen werden.

12. Verfahren nach einem der vorherigen Ansprüche, wobei der Transportpfad (3) und/oder jeder der weiteren Transportpfade (3') und/oder der Arbeitspfad (9) und/oder jeder der weiteren Arbeitspfade (9') in der Bodenreinigungsmaschine gespeichert werden, wobei eine Route (1) aus dem gespeicherten Transportpfad (3) und/oder jedem der gespeicherten weiteren Transportpfade (3') und/oder dem gespeicherten Arbeitspfad (9) und/oder jedem der gespeicherten weiteren Arbeitspfade (9') kombiniert wird.

## Claims

1. Method for determining a route (1) for a floor cleaning machine in an overall area (2), wherein the floor cleaning machine comprises a cleaning element that is able to be activated for an action on a floor surface, wherein, in a first step (101), a transport path (3) is determined, wherein the overall area (2) contains the transport path (3), wherein the transport path (3) extends between a first and a second starting/end area (5), wherein the cleaning element is deactivated while the floor cleaning machine moves along the transport path (3), wherein, in a second step (102), a working area (7) is determined, wherein the overall area (2) contains the working area (7), wherein the working area (7) contains at least one of the starting/end areas (5), wherein the cleaning element is at least temporarily activated while the floor cleaning machine moves within the working area (7) along a working path (9), wherein the route (1) contains the transport path (3), wherein, in the first step (101), at least one further transport path (3') is determined, wherein the overall area (2) contains each of the further transport paths (3'), wherein each of the further transport paths (3') extends in each case between a first further and a second further starting/end area (5'), wherein the cleaning element is deactivated while the floor cleaning machine moves along each of the further transport paths (3'), wherein, in the second step (102), at least one further working area (7') is determined, wherein the overall area (2) contains each of the further working areas (7'), wherein each of the further working areas (7') contains at least one of the further starting/end areas (5'), wherein the cleaning element is at least temporarily activated while the floor cleaning machine moves within each of the further working areas (7') along a respective further working path (9'), wherein the route (1) contains each of the further transport paths (3'), wherein the working area (7) contains another of the further starting/end areas (5').

2. Method according to Claim 1, wherein, in a third step (103), the working path (9) is determined within the working area (7), wherein the route (1) contains the working path (9).

3. Method according to either of the preceding claims, wherein, in the third step (103), each of the further working paths (9') is determined within the respective further working area (7'), wherein the route (1) contains each of the further working paths (9').

4. Method according to one of the preceding claims, wherein the transport path (3) and/or each of the further transport paths (3') is determined through learning.

5. Method according to Claim 4, wherein the learning comprises travelling the transport path (3) and/or each of the further transport paths (3') with the floor cleaning machine and/or inputting the transport path (3) and/or each of the further transport paths (3') via an interface.

6. Method according to one of the preceding claims, wherein the working path (9) and/or each of the further working paths (9') is determined through learning or independently by the floor cleaning machine.

7. Method according to Claim 6, wherein the learning comprises travelling the working path (9) and/or each of the further working paths (9') with the floor cleaning machine and/or inputting the working path (9) and/or each of the further working paths (9') via an interface.

8. Method according to Claim 6, wherein the independent determination comprises detecting the surroundings of the floor cleaning machine.

9. Method according to one of the preceding claims, wherein one of the starting/end areas (5) and one of the further starting/end areas (5') are coincident.

10. Method according to one of the preceding claims, wherein one of the starting/end areas (5) comprises a power supply apparatus, in particular a charging station.

11. Method according to one of the preceding claims, wherein both the remaining distance of the route (1) and the remaining distance corresponding to a remaining amount of charge of the floor cleaning machine are determined along the route (1), wherein the remaining distance of the route (1) and the remaining distance corresponding to the remaining amount of charge of the floor cleaning machine are compared with one another.

12. Method according to one of the preceding claims, wherein the transport path (3) and/or each of the further transport paths (3') and/or the working path (9) and/or each of the further working paths (9') are stored in the floor cleaning machine, wherein a route (1) is combined from the stored transport path (3) and/or each of the stored further transport paths (3') and/or the stored working path (9) and/or each of the stored further working paths (9').

## Revendications

1. Procédé de détermination d'un itinéraire (1) pour une machine de nettoyage des sols dans une aire totale (2), la machine de nettoyage des sols comportant un élément de nettoyage qui peut être activé pour venir en prise avec une surface de sol, un chemin de transport (3) étant déterminé dans une première étape (101), l'aire totale (2) comprenant le chemin de transport (3), le chemin de transport (3) s'étendant entre une première et une deuxième aire de début/de fin (5), l'élément de nettoyage étant désactivé pendant un mouvement de la machine de nettoyage des sols le long du chemin de transport (3), une aire de travail (7) étant déterminée dans une deuxième étape (102), l'aire totale (2) comprenant l'aire de travail (7), l'aire de travail (7) comprenant au moins l'une des aires de début/de fin (5), l'élément de nettoyage étant au moins temporairement activé pendant un mouvement de la machine de nettoyage des sols à l'intérieur de l'aire de travail (7) le long d'un chemin de travail (9), l'itinéraire (1) comprenant le chemin de transport (3), au moins un chemin de transport supplémentaire (3') étant déterminé dans la première étape (101), l'aire totale (2) comprenant chacun des chemins de transport supplémentaires (3'), chacun des chemins de transport supplémentaires (3') s'étendant respectivement entre des première et deuxième aires de début/de fin supplémentaires (5'), l'élément de nettoyage étant désactivé pendant un mouvement de la machine de nettoyage des sols le long de chacun des chemins de transport supplémentaires (3'), au moins une aire de travail supplémentaire (7') étant déterminée dans la deuxième étape (102), l'aire totale (2) comprenant chacune des aires de travail supplémentaires (7'), chacune des aires de travail supplémentaires (7') comprenant au moins l'une des aires de début/de fin supplémentaires (5'), l'élément de nettoyage étant au moins temporairement activé pendant un mouvement de la machine de nettoyage des sols à l'intérieur de chacune des aires de travail supplémentaires (7') à chaque fois le long d'un chemin de travail supplémentaire (9'), l'itinéraire (1) comprenant chacun des chemins de transport supplémentaires (3'), l'aire de travail (7) comprenant une autre des aires de début/de fin supplémentaires (5').

2. Procédé selon la revendication 1, le chemin de travail (9) à l'intérieur de l'aire de travail (7) étant déterminé dans une troisième étape (103), l'itinéraire (1) comprenant le chemin de travail (9).

3. Procédé selon l'une des revendications précédentes, chacun des chemins de travail supplémentaires (9') à l'intérieur de l'aire de travail supplémentaire (7') respective étant déterminé dans la troisième étape (103), l'itinéraire (1) comprenant chacun des chemins de travail supplémentaires (9').

4. Procédé selon l'une des revendications précédentes, le chemin de transport (3) et/ou chacun des chemins de transport supplémentaires (3') étant déterminés par apprentissage.

5. Procédé selon la revendication 4, l'apprentissage comprenant une conduite de la machine de nettoyage des sols sur le chemin de transport (3) et/ou chacun des chemins de transport supplémentaires (3') et/ou une saisie du chemin de transport (3) et/ou de chacun des chemins de transport supplémentaires (3') par le biais d'une interface.

6. Procédé selon l'une des revendications précédentes, le chemin de travail (9) et/ou chacun des chemins de travail supplémentaires (9') étant déterminés par apprentissage ou automatiquement par la machine de nettoyage des sols.

7. Procédé selon la revendication 6, l'apprentissage comprenant une conduite de la machine de nettoyage des sols sur le chemin de travail (9) et/ou chacun des chemins de travail supplémentaires (9') et/ou une saisie du chemin de travail (9) et/ou de chacun des chemins de travail supplémentaires (9') par le biais d'une interface.

8. Procédé selon la revendication 6, la détermination automatique comprenant une acquisition de l'environnement de la machine de nettoyage des sols.

9. Procédé selon l'une des revendications précédentes, l'une des aires de début/de fin (5) et l'une des aires de début/de fin supplémentaires (5') étant coïncidentes.

10. Procédé selon l'une des revendications précédentes, l'une des aires de début/de fin (5) comprenant un dispositif d'approvisionnement, notamment une station de charge.

11. Procédé selon l'une des revendications précédentes, le parcours restant de l'itinéraire (1) ainsi que le parcours restant correspondant à une quantité restante d'une charge de la machine de nettoyage des sols étant déterminés le long de l'itinéraire (1), le parcours restant de l'itinéraire (1) et le parcours restant correspondant à la quantité restante de la charge de la machine de nettoyage des sols étant comparés entre eux.

12. Procédé selon l'une des revendications précédentes, le chemin de transport (3) et/ou chacun des chemins de transport supplémentaires (3') et/ou le chemin de travail (9) et/ou chacun des chemins de travail supplémentaires (9') étant mémorisés dans la machine de nettoyage des sols, un itinéraire (1) étant combiné à partir du chemin de transport (3) mémorisé et/ou de chacun des chemins de transport supplémentaires (3') mémorisés et/ou du chemin de travail (9) mémorisé et/ou de chacun des chemins de travail supplémentaires (9') mémorisés.
